# EUROPÄISCHE PATENTSCHRIFT

(11) **EP 2 202 940 B1**
(45) Veröffentlichungstag und Bekanntmachung des Hinweises auf die Patenterteilung: **15.03.2017**
(21) Anmeldenummer: 09014272.0
(22) Anmeldetag: 16.11.2009
(51) Int. Cl.: H04L 29/06, H04N 21/234, H04N 21/438, H04N 21/44, H04N 21/61, H04N 21/6405

(54) **Verfahren und Multicast-Replikationspunkt zum Bereitstellen von Programmen einer Multicast-Gruppe**
Method and multicast replication point for providing programs of a multicast group
Procédé et point de reproduction multicast destinés à la préparation de programmes d'un groupe multicast

(30) Priorität: 03.12.2008 DE 102008060346
(43) Veröffentlichungstag der Anmeldung: 30.06.2010
(73) Patentinhaber: Deutsche Telekom AG, 53113 Bonn (DE)
(72) Erfinder: Sturm, Peter, 64665 Alsbach-Hähnlein (DE)
(74) Vertreter: Blumbach Zinngrebe

(56) Entgegenhaltungen:
- EP-A2- 1 487 215
- EP-A2- 1 796 394
- WO-A1-2006/016950
- US-A1- 2007 121 629
- US-A1- 2007 250 890

## Beschreibung

Die Erfindung betrifft im allgemeinen eine Video- oder Multimedia-Netzwerkumgebung zum Verteilen von Programmen an eine Vielzahl von Teilnehmern und insbesondere ein Verfahren sowie einen Multicast-Replikationspunkt zum Bereitstellen von Programmen einer Multicast-Gruppe in einer IPTV-Umgebung.

Verfahren und Systeme zur Übertragung von gruppenindividuellen Medienströmen, auch Media-Streams genannt, über ein Verteilernetzwerk sind hinlänglich bekannt. Bei diesen bekannten Verfahren werden verschiedene multimediale Datenströme an einem Punkt oder mehreren vorbestimmten Punkten in das Verteilernetz eingespeist und am anderen Ende des Verteilernetzes über sogenannte Multicast-Replikationspunkte gezielt einzelnen Teilnehmern oder Gruppen von Teilnehmern zugeführt. Multimediale datenströme enthalten zum Beispiel Video-, Audio- und/oder sonstige Daten.

Ein wesentlicher Gesichtspunkt bei derartigen Multimedia-Kommunikationssystemen ist darin zu sehen, Maßnahmen bereitzustellen, mit denen eine Umschaltung von einem Programmkanal auf einen anderen Programmkanal ermöglicht werden kann. Hierbei tritt häufig das Problem auf, dass beim Umschalten zwischen zwei Programmkanälen eine sichtbare Störung im visualisierten Inhalt beim Teilnehmer wahrgenommen wird. Denn bei der Umschaltung zwischen Kanälen zu einem beliebigen Zeitpunkt ist nicht gewährleistet, dass nach der Umschaltung eine nahtlose Übertragung des Zielkanals beziehungsweise eine unmittelbare Wiedergabe des Zielkanals beim Teilnehmer möglich ist. Grundsätzlich muss beim Umschalten von einem aktuell dargestellten Programm auf ein neues Programm dafür gesorgt werden, dass zu Beginn der Darstellung des neuen Programms ein Vollbild gesendet wird, so dass ein kontinuierlicher, nahtloser Bildaufbau nach dem Umschaltprozess ermöglicht wird und somit sichtbare Störungen beim Teilnehmer vermieden werden können.

Ein bekanntes Verfahren zum nahtlosen Umschalten zwischen Programmkanälen in einem digitalen videobasierten Unterhaltungsnetzwerk ist beispielsweise aus der US 2004/0034864 A1 bekannt. Darin ist ein System zur Übertragung von digitalen Videosignalen beschrieben, welches eine Kopfstelle, auch Headend genannt, aufweist, die unter anderem einen Kodierer, eine Einrichtung zum Erkennen und Auswerten von Kanalwechsel-Nachrichten sowie eine Einrichtung zum Erzeugen von Vollbildern aufweist. Die Kopfstelle ist über ein Verteilernetz mit einer teilnehmerseitigen Endeinrichtung verbunden. Ein Teilnehmer leitet einen Kanalwechsel ein, indem er an seinem Endgerät einen entsprechenden Kanalwechsel-Befehl eingibt, der über das Netzwerk zur Kopfstelle übertragen wird. Unter Auswertung der Kanalwechsel-Nachricht veranlasst die Erkennungseinrichtung der Kopfstelle den Kodierer, einen I-Frame, das heißt ein Vollbild des neuen Zielkanals zu erzeugen. Das Vollbild des neuen Zielkanals wird dann zur Endeinrichtung des Teilnehmers übertragen. Mit anderen Worten erfolgt die eigentliche Umschaltung zwischen Programmkanälen im Kodierer der Kopfstelle.

Die US Patentanmeldung US 2007/121629 A1 offenbart einen Kanalwechsel durch Multicasting eines Straußes von Multicast-Strömen von einem Server zu beschleunigen. Gemäß einem Ausführungsbeispiel ist jeder Multicast-Strom ausreichend verzögert, so dass ein unabhängigers Vollbild zur Verfügung steht, um ausgegeben und angezeigt zu werden. Die zeitliche Verzögerung zwischen benachbartenMulticast-Strämen in einem Multicast-Strauß ist abhängig von einer maximalen Verzögerungszeit zum Einschalten eines neues Ressourcenstroms.

Die US Patentanmeldung 2007/250890 A1 offenbart ein Verfahren zur Reduzierung von Zeitstufen zwischen digitalen Video-strömen unter Verwendung einer gekerbten Verteilungs- und Übertragung-Technik. Das Verfahren umfasst die Schritte Empfangen eines Eingangs-Datenstrom; Durchführen eines Datenstroms-Schaltvorgang von einem ersten Datenstromzu einem zweiten Datenstrom; Erzeugen einer Vielzahl von Ausgangs-Datenströme, die jeweils die Ausgabe-Datenströme mit im Wesentlichen identischen Daten aufweisen, wobei die Ausgangs-Datenströme zeitlich gegeneinander verschoben sind.

Die Europäische Patentanmeldung EP 1487215 A2 offenbart ein Verfahren zur Erleichterung der Präsentation von digitalen VideoStrömen. Die effektive Start-up-Zeit und die Verzögerung bei der Präsentation des ersten Frames des Videoinhalte wird verringert.

Der vorliegenden Erfindung liegt die Aufgabe zugrunde, ein Verfahren sowie einen Multicast-Replikationspunkt zur Verfügung zu stellen, die einen schnellen Programmkanalwechsel ermöglichen.

Ein Kerngedanke der Erfindung ist darin zu sehen, dass die Maßnahmen, die einen schnellen Programmwechsel ermöglichen, in einem Multicast-Replikationspunkt implementiert sind, der teilnehmerseitige Empfangseinrichtungen zum Beispiel mit Fernsehprogrammen versorgt. Dies erreicht der Multicast-Replikationspunkt dadurch, dass er einer Empfangseinrichtung, welche ein neues Programm angefordert hat, möglichst schnell ein Vollbild, auch I-Frame genannt, zur Verfügung stellen kann. Hierzu werden im Multicast-Replikationspunkt aus einem von einem Headend kommenden multimedialen Datenstrom mehrere Untergruppen-Datenströme erzeugt. Die Untergruppen-Datenströme werden zeitlich verzögert anstelle des ursprünglichen multimedialen Datenstroms zu einer Empfangseinrichtung, die das neue Programm angefordert hat, übertragen werden.

Das oben genannte technische Problem wird zum einen durch die Merkmale des Anspruchs 1 gelöst.

Danach wird ein Verfahren zum Bereitstellen von Programmen in einer IPTV-Umgebung zur Verfügung gestellt, wobei die Programme wenigstens einer Multicast-Gruppe zugeführt werden.

Gemäß Schritt a) wird wenigstens ein multimedialer, ein Programm darstellender Datenstrom über ein IP-basiertes Verteilernetz zu wenigstens einem Multicast-Replikationspunkt, an welchem mehrere Empfangseinrichtungen über ein Teilnehmeranschlussnetz angeschlossen werden können, übertragen. In dem multimedialen Datenstrom sind an vorbestimmten Stellen Vollbilder enthalten. Gemäß Schritt b) wird in dem Multicast-Replikationspunkt eine Anzahl von N zueinander zeitversetzter Untergruppen-Datenströme aus jedem ankommenden multimedialen Datenstrom erzeugt. Die Anzahl N ist größer als 1. In einem Schritt c) wird unter Ansprechen auf einen von einer Empfangseinrichtung kommenden Programm-Anforderungsbefehl der zum multimedialen Datenstrom, welcher das angeforderte Programm überträgt, gehörende Untergruppen-Datenstrom ermittelt, in welchem als nächstes ein Vollbild zur Empfangseinrichtung übertragen werden kann. Gemäß Schritt d) wird der ermittelte Untergruppen-Datenstrom zu der Empfangseinrichtung, welche das Programm angefordert hat, übertragen.

Angemerkt sei an dieser Stelle, dass es sich bei dem multimedialen Datenstrom um einen MPEG2 Transport Stream handeln kann. Bei dem Teilnehmeranschlussnetz kann es sich um ein xDSL-Zugangsnetz handeln. Die Empfangseinrichtungen können sogenannte Set-Top-Boxen sein.

Eine vorteilhafte Weiterbildung sieht vor, dass der zeitliche Abstand zwischen zwei aufeinanderfolgenden Vollbildern in dem multimedialen Datenstrom ermittelt wird. Zudem wird die maximale Umschaltzeit, die ein Programmwechsel maximal benötigt, vorgegeben. Die maximale Umschaltzeit definiert den zeitlichen Versatz zwischen jeweils zwei Untergruppen-Datenströmen und bestimmt damit auch den Zeitpunkt, zu dem ein Vollbild übertragen werden kann. Die Anzahl N zu erzeugender Untergruppen-Datenströme wird dann aus dem Quotienten des zeitlichen Abstandes zwischen zwei Vollbildern, die in dem multimedialen Datenstrom enthalten sind, und der maximalen Umschaltzeit berechnet. Dank dieser Maßnahme erlaubt das Verfahren eine flexible Skalierbarkeit der Umschaltzeit und somit der Zeitpunkte zum Übertragen von Vollbildern.

Um in einfacher und zuverlässiger Weise in Schritt c) den Untergruppen-Datenstrom, in dem als nächstes ein Vollbild zur Empfangseinrichtung übertragen werden kann, ermitteln zu können, wird der am Multicast-Replikationspunkt ankommende multimediale Datenstrom überwacht, um die darin enthaltenen Vollbilder zu erkennen. Ein Zähler wird dann mit jedem erkannten Vollbild neu gestartet. Eine Ausführungsvariante sieht hierbei vor, dass der Zähler immer wieder zurückgesetzt wird und, bei 1 anfangend, in Einerschritten hochzählt. Das Zählerintervall entspricht hierbei der festgelegten, maximalen Umschaltzeit. In Abhängigkeit des aktuellen Zählerstandes wird dann der in Schritt d) zu übertragende Untergruppen-Datenstrom ermittelt.

Da erfindungsgemäß nicht der am Multicast-Replikationspunkt empfangene multimediale Datenstrom, sondern der in Schritt c) ermittelte Untergruppen-Datenstrom, welcher dem verzögerten multimedialen Datenstrom entspricht, zur Empfangseinrichtung übertragen wird, erfolgt vorzugsweise im Multicast-Replikationspunkt eine Adressenumsetzung. Denn jedem an einer Empfangseinrichtung auswählbaren Programm ist eine eindeutige Multicast-Adresse zugeordnet, die somit auch zu dem entsprechenden multimedialen Datenstrom gehört.

Darüber hinaus wird jedem Untergruppen-Datenstrom, der zu einem multimedialen Datenstrom gehört, eine individuelle Adresse zugeordnet. Da die Empfangseinrichtung nur die herkömmliche Multicast-Adresse eines ausgewählten Programms kennt, wird die individuelle Adresse des in Schritt c) ermittelten Untergruppen-Datenstroms in die dem ausgewählten Programm zugeordnete Multicast-Adresse umgesetzt, so dass der zum ausgewählten Programm gehörende Untergruppen-Datenstrom von der Empfangseinrichtung empfangen werden kann.

Vorteilhafterweise enthält die jedem Untergruppen-Datenstrom zugeordnete individuelle Adresse einen Hinweis, der in Beziehung zu der Zeitverzögerung des jeweiligen Untergruppen-Datenstroms gegenüber dem dazugehörenden multimedialen Datenstrom steht. Diese Adressen können zudem als Speicheradressen verwendet werden, unter denen die Untergruppen-Datenströme in einer Speichereinrichtung des Multicast-Replikationspunktes abgelegt werden können.

Alternativ kann jedem aus einem multimedialen Datenstrom erzeugten Untergruppen-Datenstrom eine Kennung oder Speicheradresse zugeordnet werden, die in Beziehung zur zeitlichen Verzögerung des jeweiligen Untergruppen-Datenstroms gegenüber dem dazugehörenden multimedialen Datenstrom steht.

Vorzugsweise enthält der in den individuellen Adressen enthaltene Hinweis oder die Speicheradressen eine fortlaufende Numerierung, wobei der Zahlenwert 1 den Untergruppen-Datenstrom kennzeichnet, der die geringste Verzögerung zum entsprechenden multimedialen Datenstrom aufweist, der Zahlenwert 2 die zweit geringste Verzögerung zum entsprechenden multimedialen Datenstrom aufweist, u. s. w. Auf diese Weise wird sichergestellt, dass die in den jeweiligen Adressen enthaltenen Numerierungen mit dem Zählerstand des Zählers korrespondieren, so dass der aktuelle Zählerstand unmittelbar den Untergruppen-Datenstrom adressieren kann, der zur Empfangseinrichtung, die das jeweilige Programm ausgewählt hat, übertragen werden soll.

In der Praxis sind nicht alle Programme, die an einer Empfangseinrichtung ausgewählt werden können, auf den Multicast-Replikationspunkt aufgeschaltet. In einem solchen Fall wird der Programm-Anforderungsbefehl der Empfangseinrichtung vom Multicast-Replikationspunkt zu einem übergeordneten Multicast-Replikationspunkt weitergeleitet. Im übergeordneten Multicast-Replikationspunkt wird dann eine Anzahl N zueinander zeitversetzter Untergruppen-Datenströme aus einem ankommenden multimedialen Datenstrom, der das angeforderte Programm darstellt, erzeugt. N ist wiederum größer als 1. Unter Ansprechen auf den Programm-Anforderungsbefehl wird der zum angeforderten Programm gehörende Untergruppen-Datenstrom ermittelt, in dem als nächstes ein Vollbild zur Empfangseinrichtung übertragen werden kann. Der ermittelte Untergruppen-Datenstrom wird dann über den Multicast-Replikationspunkt zur Empfangseinrichtung übertragen.

Das oben genannte technische Problem wird ebenfalls durch die Merkmale des Anspruchs 5 gelöst.

Danach ist ein Multicast-Replikationspunkt zum Einsatz in einem IPTV-Kommunikationssystem vorgesehen. Wenigstens eine erste Schnittstelle ist vorgesehen, um wenigstens einen multimedialen, ein Programm darstellenden Datenstrom über ein IP-basiertes Verteilernetz empfangen zu können. In dem multimedialen Datenstrom sind an vorbestimmten Stellen Vollbilder enthalten. Weiterhin weist der Multicast-Replikationspunkt mehrere zweite Schnittstellen zum Anschalten von Empfangseinrichtungen auf, die über ein Teilnehmeranschlussnetz, beispielsweise ein xDSL-Zugangsnetz mit dem Multicast-Replikationspunkt verbunden sind. Weiterhin ist wenigstens eine Speichereinrichtung vorgesehen, in welcher eine Anzahl von N zueinander zeitversetzter Untergruppen-Datenströme abgelegt sind, die aus einem empfangenen multimedialen Datenstrom erzeugt werden. Die Anzahl N ist wiederum größer als 1. Eine erste Ermittlungseinrichtung dient dazu, unter Ansprechen auf einen von einer Empfangseinrichtung kommenden Programm-Anforderungsbefehl den Untergruppen-Datenstrom zu ermitteln, der als nächstes ein Vollbild enthält.

Vorteilhafterweise ist im Multicast-Replikationspunkt eine Überwachungs- und Analyseeinrichtung zum Überwachen eines empfangenen multimedialen Datenstroms vorgesehen, um darin enthaltene Vollbilder zu erkennen. Hierzu kann die Überwachungs- und Analyseeinrichtung einen MPEG Network Abstraction-Layer (deutsch: MPEG-Netzwerk-Abstraktionsschicht) aufweisen, der sogenannte Picture Parameter Sets (PPS) oder Sequence Parameter Sets (SPS) in dem multimedialen Datenstrom identifizieren kann. Eine zweite Ermittlungseinrichtung dient zum Ermitteln des zeitlichen Abstandes zwischen zwei aufeinanderfolgenden Vollbildern in dem überwachten multimedialen Datenstrom. Die zweite Ermittlungseinrichtung kann in der Überwachungs- und Analyseinrichtung implementiert sein. Zudem kann ein Speicher vorgesehen sein, in dem eine vorbestimmbare maximale Umschaltzeit gespeichert ist. Die Anzahl N entspricht dem Quotienten des zeitlichen Abstandes zweier Vollbilder und der maximalen Umschaltzeit.

Um zuverlässig und in einfacher Weise den Untergruppen-Datenstrom ermitteln zu können, weist die erste Ermittlungseinrichtung einen Zähler auf, der mit jedem erkannten Vollbild neu gestartet wird und dessen Zählerintervall der maximalen Umschaltzeit entspricht. Die erste Ermittlungseinrichtung ist ferner zum Ermitteln des zu übertragenden Untergruppen-Datenstroms in Abhängigkeit des aktuellen Zählerzustandes ausgebildet.

Um sicherzustellen, dass der ermittelte Untergruppen-Datenstrom von der ein Programm anforderndes Empfangseinrichtung empfangen werden kann, ist eine Adressenumsetzungseinrichtung vorgesehen. Diese ist erforderlich, da jedem an einer Empfangseinrichtung auswählbaren Programm eine eindeutige Multicast-Adresse und jedem zu einem auswählbaren Programm gehörenden Untergruppen-Datenstrom eine individuelle Adresse zugeordnet ist. Die Adressenumsetzungseinrichtung sorgt dafür, dass die individuelle Adresse eines ermittelten Untergruppen-Datenstroms in die dem ausgewählten Programm zugeordnete Multicast-Adresse umgesetzt wird.

Die Erfindung wird nachfolgend anhand eines Ausführungsbeispiels in Verbindung mit den beiliegenden Zeichnungen näher erläutert. Gezeigt werden in
- Fig. 1: der Ausschnitt eines beispielhaften IPTV-Kommunikationssystems, in welchem die Erfindung verwirklicht ist, in
- Fig. 2: ein detailliertes Blockschaltbild des in Fig. 1 gezeigten Multicast-Replikationspunktes, und in
- Fig. 3: eine schematische Darstellung der Kommunikations-Protokollebenen zum Übertragen eines multimedialen Datenstrom.

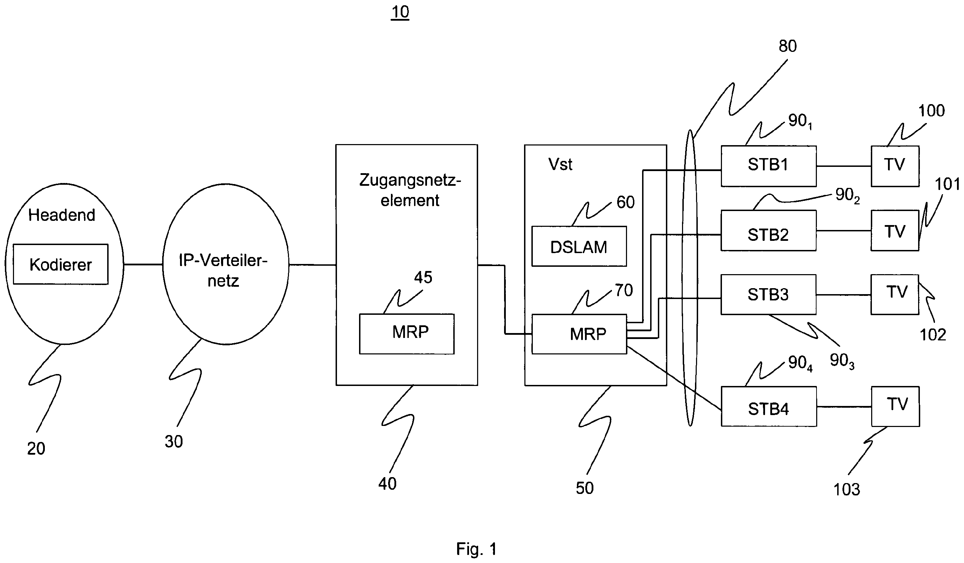

Fig. 1 zeigt lediglich einen Ausschnitt eines beispielhaften IPTV-Kommunikationssystems 10. Das IPTV-Kommunikationssystem 10 weist wenigstens eine Kopfstelle 20, im Fachjargon auch Headend genannt, auf. Die Kopfstelle 20 kann wiederum mehrere Kodierer 25 enthalten. Jeder Kodierer 25 kann ein separates TV-Programm in Form eines multimedialen Datenstroms, zum Beispiel ein MPEG2 Transport Stream in ein IP-Verteilernetz einspeisen. Das Internet kann Bestandteil des IP-basierten Verteilernetzes 30 sein. Über das IP-Verteilernetz 30 werden die von verschiedenen Sendeanstalten (nicht dargestellt) gelieferten Fernsehprogramme zu Multicast-Replikationspunkten und von dort Endteilnehmern zugeführt. Lediglich der einfacheren Darstellung wegen sind nur zwei Multicast-Replikationspunkte 45 und 70 gezeigt. Die über das IP-Verteilernetz 30 übertragenen multimedialen Datenströme können hierarchisch verteilten Multicast-Replikationspunkten zugeführt werden. So ist beispielsweise ein Zugangs-Netzelement 40 dargestellt, in welchem der übergeordnete Multicast-Replikationspunkt 45 enthalten ist. Das Zugangs-Netzelement 40 ist typischerweise mit einer Teilnehmer-Vermittlungsstelle 50 verbunden, welche einen an sich bekannten DSLAM 60 (Digital Subscriber Line Access Multiplexer) enthalten kann. In dem DSLAM 60 kann der Multicast-replikationspunkt 70 enthalten sein. Alternativ bildet der Multicast-Replikationspunkt 70 auch eine separate Funktionseinheit, wie in Fig. 1 dargestellt. Der Multicast-Replikationspunkt 70 verteilt die über das IP-Verteilernetz 30 empfangenen multimedialen Datenströme über ein Teilnehmeranschlussnetz 80 an Endteilnehmer, welche wenigstens eine Multicast-Gruppe bilden können, weiter. Angemerkt sei an dieser Stelle, dass es sich bei dem Teilnehmeranschlussnetz 80 beispielsweise um ein xDSL-Zugangsnetz handeln kann. Im vorliegenden Beispiel sind vier Endteilnehmer dargestellt, welche vier Empfangseinrichtungen 90₁, 90₂, 90₃ und 90₄ und die mit ihnen verbundenen Fernsehgeräte 100 bis 103 umfassen. Die vier Endteilnehmer können eine sogenannte Multicast-Gruppe bilden, d. h. sie empfangen alle das gleiche Programm vom Multicast-Replikationspunkt 70. Demzufolge können im vorliegenden Beispiel die über das IP-Veteilernetz 30 übertragenen multimedialen Datenströme auch als Multicast-Datenströme bezeichnet werden. Die vier Empfangseinrichtungen 90₁, 90₂, 90₃ und 90₄ können herkömmliche Set-Top-Boxen sein, an die jeweils das Fernsehgerät 100, 101, 102 beziehungsweise 103 angeschlossen ist. Die Set-Top-Boxen können aber auch integraler Bestandteil der jeweiligen Fernsehgeräte sein.

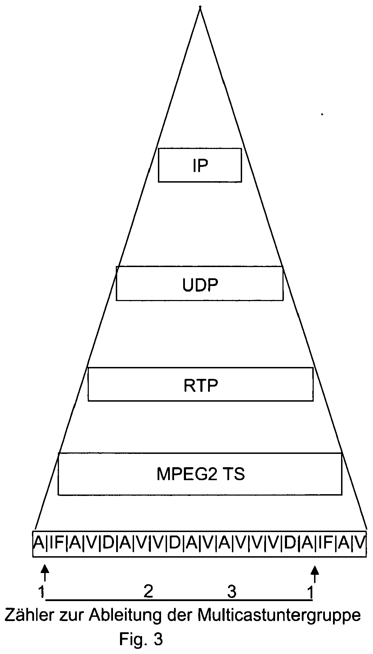

Fig. 3 zeigt in Pyramidenform die verschiedenen Kommunikationsprotokollebenen, die zur Übertragung eines multimedialen Datenstroms, verwendet werden können. Die unterste Ebene zeigt einen multimedialen Datenstrom, der neben Videodaten V, Audiodaten A auch sonstige Daten D in Paketform überträgt. Die mit IF gekennzeichneten Pakete enthalten sogenannte I-Frames, das heißt Vollbilder des zu übertragenden Programms. Alle Datentypen des multimedialen Datenstroms werden in IP-Paketen über das IP-Verteilernetz 30 zu den Multicast-Replikationspunkten 45 und 70 übertragen. Als weitere Kommunikationsprotokolle dienen beispielsweise das MPEG2 TS-Protokoll, das Real Time Protokoll (RTP), das User Data Protokoll (UDP) und das IP-Protokoll.

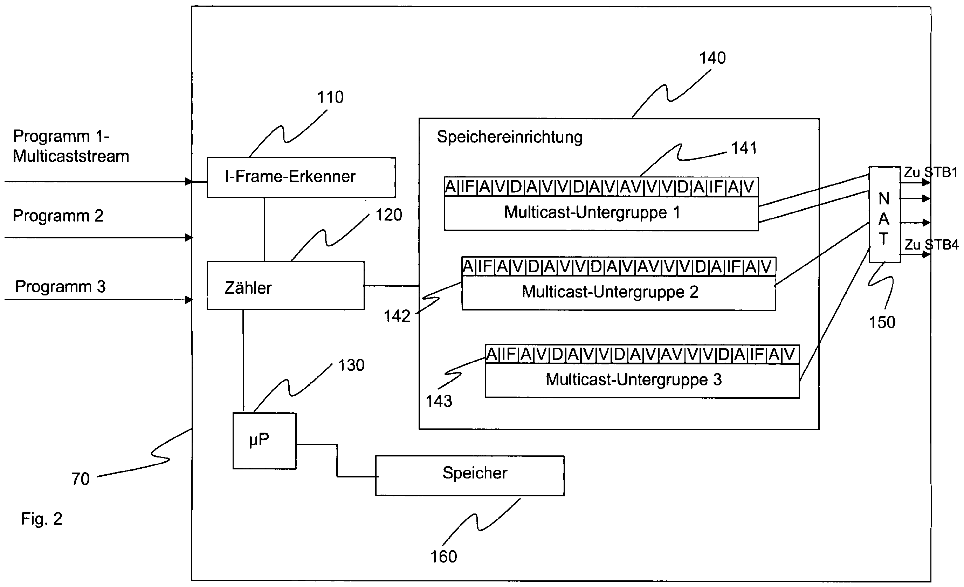

In Fig. 2 ist der in der Vermittlungsstelle 50 implementierte Multicast-Replikationspunkt 70 näher ausgeführt. Beispielsweise sind drei Programme, nämlich die Programme 1, 2 und 3 aktuell auf den Multicast-Replikationspunkt 70 aufgeschaltet. Lediglich der das Programm 1 übertragende multimediale Datenstrom ist in Fig. 2 dargestellt. Der Aufbau des Multicast-Replikationspunktes 70 wird lediglich insoweit erläutert, wie er zu Verarbeitung des multimedialen Datenstroms, welcher das Programm 1 enthält, erforderlich ist. Für jeden weiteren empfangenen multimedialen Datenstrom kann ein ähnlicher separater Verarbeitungszweig vorgesehen sein.

Der Multicast-Replikationspunkt 70 weist eine I-Frame-Erkennungseinrichtung 110 auf, an deren Eingang der multimediale Datenstrom angelegt wird, welcher das Programm 1 überträgt. Die I-Frame-Erkennungseinrichtung 110 weist vorzugsweise eine Überwachungs- und Analyseeinrichtung auf, um empfangene IP-Pakete, in denen der multimediale Datenstrom transportiert wird, auf Video-MPEG-Pakete mit Vollbildinhalt zu untersuchen. Solche Pakete sind in den Fig. 2 und 3 mit IF gekennzeichnet. Die I-Frame-Erkennungseinrichtung 110 ist mit einem Zähler 120 verbunden, der, wie nachfolgend noch näher ausgeführt wird, von der I-Frame-Erkennungseinrichtung 110 getriggert wird, sobald diese ein Vollbild in dem empfangenen multimedialen Datenstrom erkannt hat. Vorzugsweise beginnt der Zähler 120 mit jedem Erkennen eines Vollbildes bei 1 an zu zählen und wird anschließend in vorbestimmten Zeitintervallen um jeweils 1 inkrementiert. Das Zählerintervall kann individuell eingestellt werden und ist beispielsweise im Speicher 160 hinterlegt. Ein Mikroprozessor 130 überwacht und steuert den Multicast-Replikationspunktes 70. Beispielsweise liest der Mikroprozessor 130 das Zählerintervall aus dem Speicher 160 aus, um den Zähler 120 entsprechend zu takten. Der Multicast-Replikationspunkt 70 kann eine Speichereinrichtung 140 aufweisen, die aus mehreren FIFO-Speichereinheiten besteht. Im vorliegenden Beispiel sind drei FIFO-Speichereinheiten 141, 142 und 143 vorgesehen. Die Methode, die Anzahl an Speichereinheiten zu ermitteln, wird unten noch erläutert.

Die drei Speichereinheiten 141 bis 143 dienen dazu, jeweils einen Untergruppen-Datenstrom des am Eingang empfangenen multimedialen Datenstroms zwischen zu speichern. Hierzu wird beispielsweise der empfangene multimediale Datenstrom derart in die drei Speichereinheiten 141, 142 und 143 eingelesen, dass drei zueinander zeitversetzte Untergruppen-Datenströme entstehen. Eine denkbare Ausführungsform sieht vor, dass der multimediale Datenstrom parallel über drei Verzögerungsglieder mit unterschiedlichen Verzögerungszeiten geführt wird. Die Verzögerungsglieder sind jeweils mit einem der Speichereinheiten 141, 142 bzw. 143 verbunden. Wie unten noch näher ausgeführt wird, wird im vorliegenden Beispiel der in der Speichereinheit 141 gespeicherte Untergruppen-Datenstrom um eine Sekunde, der in der Speichereinheit 142 gespeicherte Untergruppen-Datenstrom um zwei Sekunden und der in der Speichereinheit 143 gespeicherte Untergruppen-Datenstrom um drei Sekunden verzögert. Die Speichereinheiten 141 bis 143 werden auch als Multicast-Untergruppen 1, 2 bzw. 3 bezeichnet, da jede Speichereinheit eine oder mehrere der Empfangseinrichtungen 90₁ bis 90₄ mit einem Untergruppen-Datenstrom versorgen kann. Auf diese Weise kann die die Empfangseinrichtungen 90₁ bis 90₄ umfassende Multicast-Gruppe, welche das Programm 1 empfängt, in Multicast-Untergruppen unterteilt werden, die zwar alle das Programm 1 empfangen, aber möglicher Weise zu unterschiedlichen Zeiten.

Nunmehr wird kurz erläutert, wie die Anzahl der Speichereinheiten 141, 142 und 143 sowie der zeitliche Versatz der in den Speichereinheiten 141 bis 143 gespeicherten Untergruppen-Datenströme begründet ist.

Bezug nehmend auf Fig. 2 und 3 ist ersichtlich, dass in dem dargestellten Abschnitt des multimedialen Datenstroms zwei I-Frames IF, das heißt Pakete mit Vollbildinhalten, enthalten sind, die im vorliegenden Beispiel einen zeitlichen Abstand von drei Sekunden aufweisen. Angenommen sei deshalb, dass der maximal zu erwartende I-Frame-Abstand drei Sekunden beträgt. Weiter sei angenommen, dass der Diensteanbieter dem Kunden einen Programmwechsel mit einer maximale Umschaltzeit von beispielsweise einer Sekunde ermöglichen möchte. Diese Umschaltzeit ist im Speicher 160 hinterlegt. Aus dem Quotienten des maximal zu erwartenden I-Frame-Abstands von drei Sekunden und der maximalen Umschaltzeit von einer Sekunde ergibt sich somit eine Anzahl von drei Speichereinheiten, die jeweils einen Untergruppen-Datenstrom speichern. Um eine maximale Umschaltzeit von einer Sekunde zu garantieren, werden, wie oben erläutert, die in den Speichereinheiten 141 bis 143 gespeicherten Untergruppen-Datenströme um eine, zwei bzw. 3 Sekunden verzögert. Für den Fall, dass die Umschaltzeit 500ms betragen soll und der maximal zu erwartende Abstand zwischen zwei Vollbildern in multimedialen Datenströmen 4 Sekunden beträgt, wären acht Speichereinheiten erforderlich, die jeweils einen entsprechend verzögerten Untergruppen-Datenstrom speichern würden.

Um die Untergruppen-Datenströme bzw. die Speichereinheiten 141 bis 143 mit Hilfe des Zählers 120 adressieren zu können, wird im vorliegenden Beispiel der Speichereinheit 141 die Adresse 1, der Speichereinheit 142 die Adresse 2 und der Speichereinheit 143 die Adresse 3 zugeordnet. Da der Zähler 120 mit jedem erkannten I-Frame gestartet wird, die maximale Umschaltzeit, welche dem Zählerintervall entspricht, eine Sekunde beträgt und der maximale zeitliche Abstand zwischen zwei aufeinanderfolgender I-Frame drei Sekunden beträgt, zählt der Zähler 120 mit dem Erkennen eines I-Frames jedes Mal von 1 bis 3. Anhand des aktuellen Zählerstandes kann deshalb die Speichereinheit und somit der Untergruppen-Datenstrom ermittelt werden, der als nächstes ein Vollbild zu einem Teilnehmer übertragen kann, der beispielsweise das Programm 1 angefordert hat.

Den an den Empfangseinrichtungen 90₁, 90₂, 90₃ und 90₄ auswählbaren Programmen ist eine feste Multicast-Adresse zugeordnet. Beispielsweise ist dem Programm 1 die Multicast-Adresse 201, dem Programm 2 die Multicast-Adresse 202 und dem Programm 3 die Multicast-Adresse 203 zugeordnet. Darüber hinaus wird den in den Speichereinheiten 141, 142 und 143 hinterlegten Untergruppen-Datenströmen jeweils eine individuelle Adresse zugeordnet, die nicht mit der Multicast-Adresse des Programms 1 übereinstimmt. Beispielsweise wird dem in der Speichereinheit 141 zwischen gespeicherten Untergruppen-Datenstrom die individuelle Adresse 201-1, dem in der Speichereinheit 142 zwischen gespeicherten Untergruppen-Datenstrom die individuelle Adresse 201-2 und dem in der Speichereinheit 143 zwischen gespeicherten Untergruppen-Datenstrom die individuelle Adresse 201-3 zugeordnet. Angemerkt sei nochmals, dass die drei Untergruppen-Datenströme jeweils das Programm 1 enthalten. Damit diese Untergruppen-Datenströme zu einer Empfangseinrichtung, welche das Programm 1 angefordert hat, übertragen werden können, ist eine Adressenumsetzeinrichtung 150, auch NAT (Network Address Translation) genannt, vorgesehen. Die Adressenumsetzeinrichtung setzt die Adresse des ermittelten Untergruppen-Datenstroms, z. B. die Adresse 201-1, in die entsprechende Multicast-Adresse des dazugehörenden multimedialen Datenstroms, im vorliegenden Beispiel in die Adresse 201, um, welche den Empfangseinrichtung 90₁ bis 90₄ bekannt ist.

An dieser Stelle sei nochmals angemerkt, dass der in Fig. 2 hinsichtlich des multimedialen Datenstroms 1 dargestellte Aufbau des Multicast-Replikationspunktes mehrfach vorhanden sein kann, um eine parallele Verarbeitung mehrerer am Eingang anliegender multimedialer Datenströme zu ermöglichen. Es sei darauf hingewiesen, dass der übergeordnete Multicast-Replikationspunkt 45 in der gleichen oder ähnlichen Weise aufgebaut sein kann.

Mit dem in Fig. 2 gezeigten erfinderischen Multicast-Replikationspunkt kann nicht nur einer Empfangseinrichtung, die neu an den Multicast-Replikationspunkt angeschaltet wird, sondern auch einer bereits zu einer Multicast-Gruppe gehörenden Empfangseinrichtung, die einen Programwechsel wünscht, schnellstmöglich das angeforderte neue Programm übermittelt werden.

Nachfolgend wird die Funktionsweise des in Fig. 1 und 2 gezeigten Multicast-Replikationspunktes 70 näher erläutert.

Angenommen sei nunmehr ein Szenario, bei dem die Empfangseinrichtungen 90₁ und 90₃ der Multicast-Gruppe, die das Programm 1 empfängt, zugeordnet werden. Die Empfangseinrichtungen 90₂ und 90₄ gehören bereits der Multicast-Gruppe an. Natürlich können auch weitere Empfangseinrichtungen über das Teilnehmeranschlussnetz 80 mit dem Multicast-Replikationspunkt 70 verbunden sein, welche anderen Multicast-Gruppe zugeordnet sein können, die beispielsweise das Programm 2 ansehen oder ansehen wollen.

Angemerkt sei, dass die Information über den maximal zu erwartende I-Frame-Abstand von 3 Sekunden entweder vom Headend 20 dem Multicast-Replikationspunkt 70 zur Verfügung gestellt wird, oder im Multicast-Replikationspunkt 70 selbst, beispielsweise in der als Ermittlungseinrichtung fungierenden I-Frame- Erkennungseinrichtung 110 aus dem empfangenen multimedialen Datenstrom während der Initialisierungsphase ermittelt wird.

Wie oben bereits erläutert, wird der am Multicast-Replikationspunkt 70 empfangene multimediale Datenstrom, der das Programm 1 enthält, in drei zeitversetzte Untergruppen-Datenströme verzögert, die in den drei Speichereinheiten 141, 142 und 143 gespeichert werden. In ähnlicher Weise werden zu den multimedialen Datenströme, die die Programme 2 und 3 übertragen, jeweils drei zueinander zeitversetzte Untergruppen-Datenströme erzeugt und in entsprechenden Speichereinheiten gespeichert.

Der am Multicast-Replikationspunkt 70 ankommende multimediale Datenstrom, der das Programm 1 überträgt, wird kontinuierlich der I-Frame-Erkennungseinrichtung 110 zugeführt, die Pakete mit Vollbildinhalt im multimedialen Datenstrom sucht. Darüber hinaus werden kontinuierlich zu dem multimedialen Datenstrom drei zueinander zeitversetzte Untergruppen-Datenströme erzeugt, die jeweils in den Speichereinheiten 141, 142 und 143 gespeichert werden, bevor sie zu den entsprechenden Empfangseinrichtungen 90₁ bis 90₄ übertragen werden. Die Länge der Speichereinheiten 141, 142 und 143 ist implementationsabhängig. Die I-Frame-Erkennungseinrichtung 110 startet den Zähler 120 immer dann, wenn ein Paket mit Vollbildinhalt erkannt worden ist. Der Zähler 120 zählt daraufhin mit einem Zählerintervall von einer Sekunde von 1 bis 3, wobei der jeweilige Zählerstand der Adresse der jeweiligen Speichereinheit 141, 142 oder 143 entspricht. Die Information, welcher Untergruppen-Datenstrom als nächstes ein Vollbild zur Empfangseinrichtung übertragen kann, erfolgt somit aus dem aktuellen Zählerstand des Zählers 120, welcher synchron zum ursprünglichen multimedialen Datenstrom läuft und mit jedem neu erkannten Vollbild zurückgesetzt wird.

Nunmehr sei der Fall angenommen, dass die Empfangseinrichtung 90₁ erstmalig an den Multicast-Replikationspunkt 70 angeschlossen wird und neu kein Programm empfängt. Nachdem der Kunde zum Beispiel an der Fernbedienung des Fernsehempfängers 100 das Programm 1 ausgewählt hat, überträgt die Empfangseinrichtung 90₁ einen Programm-Anforderungsbefehl über eine dedizierte Leitung des Teilnehmeranschlussnetzes 80 zur Vermittlungsstelle 50, in der der Programm-Anforderungsbefehl zum Multicast-Replikationspunkt 70 weitergeleitet wird. Unter Ansprechen auf den empfangenen Programm-Anforderungsbefehl liest der Mikroprozessor 130 den aktuellen Zählerstand des Zählers 120 aus, der die Adresse eines der drei Speichereinheiten 141, 142 oder 143 darstellt. Der aktuelle Zählerstand sei im vorliegenden Beispiel 2. Dies bedeutet, dass die Empfangseinrichtung 90₁ der Multicast-Untergruppe 2 des Programms 1 zugeordnet wird, deren Untergruppen-Datenstrom in der Speichereinheiten 142 enthalten ist. Der in der adressierten Speichereinheit 142 zwischengespeicherte Untergruppen-Datenstrom, der gemäß dem Ausführungsbeispiel gegenüber dem multimedialen Datenstrom um zwei Sekunden zeitverzögert ist, stellt sicher, dass die Empfangseinrichtung 90₁ schnellstmöglich nach Absenden des Programm-Anforderungsbefehls ein Vollbild des Programms 1 erhält. Bevor der in der Speichereinheit 142 gespeicherte Untergruppen-Datenstrom jedoch zur Empfangseinrichtung 90₁ übertragen wird, muss die dem Untergruppen-Datenstrom zugeordnete individuelle Adresse 201-2 in die Multicast-Adresse 201 des gewünschten Programms 1 umgesetzt werden. Denn die Empfangseinrichtung 90₁ kennt nur diese Multicast-Adresse. Die erforderliche Adressenumsetzung erfolgt in der Adressenumsetzungseinrichtung 150. Auf diese Weise wird sichergestellt, dass das Programm 1 von der Empfangseinrichtung 90₃ empfangen werden kann.
Sobald das erste Vollbild des Untergruppen-Datenstroms von der Speichereinheiten 142 an der Empfangseinrichtung 90₁ empfangen worden ist, kann das Programm am Fernsehempfänger 100 des Kunden dargestellt werden.

Nunmehr wird ein Szenario betrachtet, bei dem der Kunde des Fernsehempfängers 102 beispielsweise vom aktuell empfangenen Programm 2 auf Programm 1 wechseln möchte. Hierzu gibt der Kunde an der Fernbedienung seine Fernsehempfängers 102 das gewünschte Programm 1 ein. Unter Ansprechen auf den Programmwunsch sendet die Empfangseinrichtung 90₃ einen entsprechenden Programm-Anforderungsbefehl, welcher das Programm 1 für die Empfangseinrichtung 90₃ anfordert, zum Multicast-Replikationspunkt 70. Unter Ansprechen auf den empfangenen Programm-Anforderungsbefehl liest der Mikroprozessor 130 wiederum den aktuellen Zählerstand des Zählers 120 aus. Im vorliegenden Beispiel ist der aktuelle Zählerstand wiederum 2, so dass auch die Empfangseinrichtung 90₃ der Multicast-Untergruppe 2 zugeordnet wird, deren Untergruppen-Datenstrom in der Speichereinheiten 142 zwischengespeichert wird.

Bevor der in der Speichereinheit 142 gespeicherte Untergruppen-Datenstrom zur Empfangseinrichtung 90₃ übertragen wird, muss die dem Untergruppen-Datenstrom zugeordnete individuelle Adrtesse 201-2 in die Multicast-Adresse 201 des gewünschten Programms 1 umgesetzt werden. Denn die Empfangseinrichtung 90₃ kennt nur diese Multicast-Adresse. Die erforderliche Adressenumsetzung erfolgt in der Adressenumsetzungseinrichtung 150. Auf diese Weise wird sichergestellt, dass das Programm 1 von der Empfangseinrichtung 90₃ empfangen werden kann.

Für den Fall, dass eine der Empfangseinrichtungen 90₁ bis 90₄ ein Programm anfordert, welches nicht auf den Multicast-Replikationspunkt 70 aufgeschaltet ist, wird der entsprechende Programm-Anforderungsbefehl zum übergeordneten Multicast-Replikationspunkt 45 im Zugangsnetzelement 40 weitergeleitet. Da der Multicast-Replikationspunkt 45 in seiner Funktionsweise dem Multicast-Replikationspunkt 70 entspricht, wird auch dort wiederum unter Ansprechen auf den empfangenen Programm-Anforderungsbefehl der aktuelle Zählerstand eines Zählers ausgelesen. Der aktuelle Zählerstand bestimmt dann die Multicast-Untergruppe, das heißt die Speichereinheit, in der der Untergruppen-Datenstrom des angeforderten Programms zwischengespeichert ist, der als nächstes ein Vollbild zur Empfangseinrichtung übertragen kann. Wiederum erfolgt im übergeordneten Multicast-Replikationspunkt 45 eine Umsetzung der separaten Adresse des ausgewählten Untergruppen-Datenstroms in die Multicast-Adresse des angeforderten Programms. Anschließend wird der ermittelte Untergruppen-Datenstrom über den Multicast-Replikationspunkt 70 Empfangseinrichtung, die das entsprechende Programm angefordert hat, übertragen.

## Patentansprüche

1. Verfahren zum Bereitstellen von Programmen einer Multicast-Gruppe in einer IPTV-Umgebung, mit folgenden Schritten:
a) Übertragen wenigstens eines multimedialen, ein Programm darstellenden Datenstroms über ein IP-basiertes Verteilernetz (30) zu wenigstens einem Multicast-Replikationspunkt (70), an welchem mehrere Empfangseinrichtungen (901 bis 904) über ein Teilnehmeranschlussnetz (80) angeschlossen werden können, wobei in dem multimedialen Datenstrom an vorbestimmten Stellen Vollbilder "IF" enthalten sind;
b) Erzeugen, in dem Multicast-Replikationspunkt (70), einer Anzahl von N zueinander zeitversetzter Untergruppen-Datenströme aus jedem ankommenden multimedialen Datenstrom, wobei N größer als 1 ist;
c) Ermitteln, unter Ansprechen auf einen Programm-Anforderungsbefehl von einer Empfangseinrichtung (901 bis 904), den zum angeforderten Programm gehörenden Untergruppen-Datenstrom, in dem als nächstes ein Vollbild zur Empfangseinrichtung (901 bis 904) übertragen werden kann;
d) Übertragen des ermittelten Untergruppen-Datenstroms zur Empfangseinrichtung (901 bis 904), die das Programm angefordert hat,
e) Zuordnen einer eindeutigen Multicast-Adresse jedem an einer Empfangseinrichtung (901 bis 904) auswählbaren Programm und einer individuellen Adresse jedem zu einem multimedialen Datenstrom gehörenden Untergruppen-Datenstrom;
f) Umsetzen der individuellen Adresse des in Schritt c) ermittelten Untergruppen-Datenstroms in die dem ausgewählten Programm zugeordnete Multicast-Adresse, so dass der zum ausgewählten Programm gehörende Untergruppen-Datenstrom von der Empfangseinrichtung (901 bis 904) empfangen werden kann;
g) Festlegen einer maximalen Umschaltzeit, die i) den zeitlichen Versatz, zwischen jeweils zwei Untergruppen-Datenströmen definiert und ii) den Zeitpunkt bestimmt, zu dem ein Vollbild übertragen werden kann, wobei die maximale Umschaltzeit mittels Ausführen folgender Schritte garantiert wird:
h) Ermitteln des zeitlichen Abstandes zwischen zwei aufeinanderfolgenden Vollbildern in dem multimedialen Datenstrom;
i) Berechnen der Anzahl N zu erzeugender Untergruppen-Datenströme aus dem Quotienten des ermittelten zeitlichen Abstandszwischen zwei aufeinanderfolgenden Vollbildern und der maximalen Umschaltzeit;
wobei Schritt c) folgende Schritte enthält:
c.2) Überwachen des am ulticast-Replikationspunkt (70) ankommenden multimedialen Datenstroms, um die darin enthaltenen Vollbilder zu verkennen;
c.3) Neustarten eines Zählers (120) mit jedem erkannten Vollbild, wobei das Zählerintervall der festgelegten, maximalen Umschaltzeit entspricht; und
wobei Schritt d) folgenden Schritt enthält:
d.2) Ermitteln des zu übertragenden Untergruppen-Datenstroms in Abhängigkeit des aktuellen Zählerstandes.

2. Verfahren nach Anspruch 1, **dadurch gekennzeichnet, dass** die jedem Untergruppen-Datenstrom zugeordnete individuelle Adresse, einen Hinweis enthält, der in Beziehung zu der Zeitverzögerung des jeweiligen Untergruppen-Datenstroms gegenüber dem dazugehörenden multimedialen Datenstrom steht.

3. Verfahren nach einem der vorstehenden Ansprüche, **dadurch gekennzeichnet, dass**
jedem aus einem multimedialen Datenstrom erzeugten Untergrüppen-Datenstrom eine Kennung zugeordnet wird, welche in Beziehung zur zeitlichen Verzögerung des jeweiligen Untergruppen-Datenstroms gegenüber dem dazugehörenden multimedialen Datenstrom steht.

4. Verfahren nach einem der vorstehenden Ansprüche, **dadurch gekennzeichnet, dass**
der Programm-Anforderungsbefehl vom Multicast-Replikationspunkt (70) zu einem übergeordneten Multicast-Replikationspunkt (45) weitergeleitet wird, wenn das angeforderte Programm nicht auf den Multicast-Replikationspunkt (70) aufgeschaltet ist, und dass folgende Schritte im übergeordneten Multicast-Replikationspunkt (45) ausgeführt werden:
Erzeugen einer Anzahl N zueinander zeitversetzter Untergruppen-Datenströme aus einem ankommenden multimedialen Datenstrom, der das angeforderte Programm darstellt, wobei N größer als 1 ist;
Ermitteln, unter Ansprechen auf den Programm-Anforderungsbefehl der Empfangseinrichtung (901 bis 904), den zum multimedialen Datenstrom gehörenden Untergruppen-Datenstrom, in dem als nächstes ein Vollbild zur Empfangseinrichtung (901 bis 904) übertragen werden kann; und
Übertragen des ermittelten Untergruppen-Datenstroms über den Multicast Replikationspunkt (70) zur Empfangseinrichtung (901 bis 904).

5. Multicast-Replikationspunkt (70) zum Einsatz in einem IPTV-Kommunikationssystem (10), mit
einer ersten Schnittstelle zum Empfangen wenigstens eines multimedialen, ein Programm darstellenden Datenstroms über ein IP-basiertes Verteilernetz (30), wobei in dem multimedialen Datenstrom an vorbestimmten Stellen Vollbilder enthalten sind,
mehreren zweiten Schnittstellen zum Anschalten von Empfangseinrichtungen (901 bis 904) über ein Teilnehmeranschlussnetz (80),
wenigstens einer Speichereinrichtung (140), in welcher eine Anzahl von N zueinander zeitversetzter Untergruppen-Datenströme abgelegt sind, die aus einem empfangenen multimedialen Datenstrom erzeugt werden, wobei N größer als 1 ist,
einer ersten Ermittlungseinrichtung (120, 130), die unter Ansprechen auf einen von einer Empfangseinrichtung (901 bis 904) kommenden Programm-Anforderungsbefehl den Untergruppen-Datenstrom ermittelt, der als nächstens ein Vollbild enthält,
**gekennzeichnet durch**:
eine Adressenumsetzungseinrichtung (150),
eine Überwachungs- und Analyseeinrichtung (110) zum Überwachen eines empfangenen multimedialen Datenstroms, um darin enthaltene Vollbilder zu erkennen,
eine zweite Ermittmigseinrichtung (110) zum Ermitteln des zeitlichen Abstands zwischen zwei aufeinanderfolgenden Vollbildern in dem überwachten multimedialen Datenstrom, und
einen Speicher (160), in dem eine vorbestimmbare maximale Umschaltzeit gespeichert ist, wobei die Anzahl N dem Quotienten des ermittelten zeitlichen Abstands zwischen zwei Vollbildern und der maximalen Umschaltzeit entspricht, wobei die erste Ermittlungseinrichtung einen Zähler (120) enthält, der mit jedem erkannten Vollbild neu gestartet wird und dessen Zählerintervall der maximalen Umschaltzeit entspricht,
wobei die erste Ermittlungseinrichtung (110, 120) zum Ermitteln des zu übertragenden Untergruppen-Datenstroms in Abhängigkeit des aktuellen Zählerstandes ausgebildet ist,
wobei jedem an einer Empfangseinrichtung auswählbaren Programm eine eindeutige Multicast-Adresse und jedem zu einem multimedialen Datenstrom gehörenden Untergruppen-Datenstrom eine individuelle Adresse zugeordnet ist, und
wobei die Adressenumsetzungseinrichtung (150) dazu ausgebildet ist, die individuelle Adresse eines ermittelten Untergruppen-Datenstroms in die dem ausgewählten Programm zugeordnete Mülticast-Adresse umzusetzen, so dass der zum ausgewählten Programm gehörende Untergruppen-Datenstrom von der Empfangseinrichtung (901 bis 904), die das Programm angefordert hat, empfangen werden kann.

## Claims

1. A method for providing programs of a multicast group in an IPTV environment, comprising the steps of:
a) transmitting at least one multimedia data stream representing a program via an IP-based distribution network (30) to at least one multicast replication point (70) to which a plurality of receiving devices (901 to 904) can be connected via a subscriber line network (80), the multimedia data stream containing I-frames "IF" at predetermined locations;
b) generating, in said multicast replication point (70), a number of N mutually time-offset subgroup data streams from each arriving multimedia data stream, wherein N is greater than 1;
c) determining, in response to a program request command from a receiving device (901 to 904), the subgroup data stream associated with the requested program, in which an I-frame can be transmitted to the receiving device (901 to 904) at the earliest possible time;
d) transmitting the determined subgroup data stream to the receiving device (901 to 904) that requested the program;
e) assigning a unique multicast address to each program selectable at a receiving device (901 to 904) and an individual address to each subgroup data stream associated with a multimedia data stream;
f) converting the individual address of the subgroup data stream determined in step c) into the multicast address assigned to the selected program, so that the subgroup data stream associated with the selected program can be received by the receiving device (901 to 904) ;
g) predefining a maximum switching time which i) defines the time offset between two subgroup data streams, and ii) defines the time at which an I-frame can be transmitted, the maximum switching time being guaranteed by performing the following steps:
h) determining the time interval between two successive I-frames in the multimedia data stream;
i) calculating the number N of subgroup data streams to be generated from the quotient of the determined time interval between two successive I-frames and the maximum switching time;
wherein step c) comprises the steps of:
c.2) monitoring the multimedia data stream arriving at the multicast replication point (70) to identify the I-frames contained therein;
c.3) restarting a counter (120) for each identified I-frame, the counter interval corresponding to the predefined maximum switching time; and
wherein step d) comprises the step of:
d.2) determining the subgroup data stream to be transmitted in dependence of the current counter reading.

2. The method as claimed in claim 1, **characterized in that** the individual address assigned to each subgroup data stream contains an indication which is related to the time delay of the respective subgroup data stream relative to the associated multimedia data stream.

3. The method as claimed in any of the preceding claims, **characterized in that** an identifier is assigned to each sub-group data stream generated from a multimedia data stream, which identifier is related to the time delay of the respective subgroup data stream relative to the associated multimedia data stream.

4. The method as claimed in any of the preceding claims, **characterized in that**
the program request command is forwarded from the multicast replication point (70) to a higher level multicast replication point (45), if the requested program is not connected to the multicast replication point (70), and that
the following steps are performed at the higher level multicast replication point (45):
generating a number N of mutually time-offset subgroup data streams from an arriving multimedia data stream representing the requested program, wherein N is greater than 1;
determining, in response to the program request command of the receiving device (901 to 904), the subgroup data stream associated with the multimedia data stream, in which an I-frame can be transmitted to the receiving device (901 to 904) at the earliest possible time; and
transmitting the determined subgroup data stream to the receiving device (901 to 904) via the multicast replication point (70).

5. A multicast replication point (70) for use in an IPTV communication system (10), comprising:
a first interface for receiving at least one multimedia data stream representing a program via an IP-based distribution network (30), the multimedia data stream containing I-frames at predetermined locations;
a plurality of second interfaces for connecting receiving devices (901 to 904) via a subscriber line network (80);
at least one memory device (140) which stores a number N of mutually time-offset subgroup data streams generated from a received multimedia data stream, wherein N is greater than 1;
first determining means (120; 130) responsive to a program request command arriving from a receiving device (901 to 904) for determining the subgroup data stream containing the earliest possible I-frame; **characterized by**:
an address conversion means (150),
a monitoring and analyzing means (110) for monitoring a received multimedia data stream to identify I-frames contained therein;
second determining means (110) for determining the time interval between two successive I-frames in the monitored multimedia data stream; and
a memory (160) which stores a predeterminable maximum switching time, wherein the number N corresponds to the quotient of the determined time interval between two I-frames and the maximum switching time;
wherein the first determining means include a counter (120) which is restarted for each identified I-frame and whose counter interval corresponds to the maximum switching time;
wherein the first determining means (110, 120) are configured to determine the subgroup data stream to be transmitted as a function of the current counter reading;
wherein a unique multicast address is assigned to each program selectable at a receiving device, and an individual address is assigned to each subgroup data stream associated with a multimedia data stream; and
wherein the address conversion means (150) is adapted to convert the individual address of a determined subgroup data stream into the multicast address associated with the selected program, so that the subgroup data stream associated with the selected program can be received by the receiving device (901 to 904) which requested the program.

## Revendications

1. Procédé de préparation de programmes d'un groupe de multidiffusion dans un environnement IPTV, comprenant les étapes suivantes :
a) transmission d'au moins un flux de données multimédia représentant un programme via un réseau de distribution (30) basé IP vers au moins un point de réplication multidiffusion (70) auquel peuvent être connectés plusieurs dispositifs de réception (901 à 904) via un réseau d'accès local (80), des trames « IF » étant contenues à des emplacements définis dans le flux de données multimédia ;
b) génération, dans le point de réplication multidiffusion (70), d'un nombre N de flux de données de sous-groupe temporellement décalés les uns des autres à partir de chaque flux de données multimédia entrant, N étant supérieur à 1 ;
c) détermination, en réaction à une instruction de demande de programme d'un dispositif de réception (901 à 904), du flux de données de sous-groupe appartenant au programme demandé, où une trame peut être transmise ensuite vers le dispositif de réception (901 à 904) ;
d) transmission du flux de données de sous-groupe déterminé vers le dispositif de réception (901 à 904) ayant demandé le programme,
e) attribution d'une adresse de multidiffusion univoque à chaque programme sélectionnable sur un dispositif de réception (901 à 904) et d'une adresse individuelle à chaque flux de données de sous-groupe appartenant à un flux de données multimédia ;
f) conversion de l'adresse individuelle du flux de données de sous-groupe déterminé en étape c) en adresse de multidiffusion attribuée au programme sélectionné, de manière à permettre la réception du flux de données de sous-groupe appartenant au programme sélectionné par le dispositif de réception (901 à 904) ;
g) fixation d'un temps de commutation maximal, lequel i) définit chaque décalage temporel entre deux flux de données de sous-groupe et ii) détermine le moment où une trame peut être transmise, le temps de commutation maximal étant garanti par exécution des étapes suivantes :
h) détermination de l'intervalle temporel entre deux trames successives dans le flux de données multimédia ;
i) calcul du nombre N de flux de données de sous-groupe à générer à partir du quotient de l'intervalle temporel déterminé entre deux trames successives et du temps de commutation maximal ;
dans lequel l'étape c) comprend les étapes suivantes :
c.2) surveillance du flux de données multimédia entrant au point de réplication multidiffusion (70) pour détecter les trames qui y sont contenues ;
c.3) redémarrage d'un compteur (120) avec chaque trame détectée, l'intervalle de compteur correspondant au temps de commutation maximal fixé ; et
dans lequel l'étape d) comprend l'étape suivante :
d.2) détermination du flux de données de sous-groupe à transmettre en fonction du niveau de compteur actuel.

2. Procédé selon la revendication 1, **caractérisé en ce que** l'adresse individuelle attribuée à chaque flux de données de sous-groupe contient une indication en relation avec la temporisation de chaque flux de données de sous-groupe par rapport au flux de données multimédia correspondant.

3. Procédé selon l'une des revendications précédentes, **caractérisé en ce qu'**à chaque flux de données de sous-groupe généré à partir d'un flux de données multimédia est attribuée une identification en relation avec la temporisation de chaque flux de données de sous-groupe par rapport au flux de données multimédia correspondant.

4. Procédé selon l'une des revendications précédentes, **caractérisé en ce que** l'instruction de demande de programme est transmise du point de réplication multidiffusion (70) à un point de réplication multidiffusion (45) de niveau supérieur si le programme demandé n'est pas connecté au point de réplication multidiffusion (70), et **en ce que** les étapes suivantes sont exécutées sur le point de réplication multidiffusion (45) de niveau supérieur :
génération d'un nombre N de flux de données de sous-groupe temporellement décalés les uns des autres à partir d'un flux de données multimédia entrant représentant le programme demandé, N étant supérieur à 1 ;
détermination, en réaction à l'instruction de demande de programme du dispositif de réception (901 à 904), du flux de données de sous-groupe appartenant au flux de données multimédia, où une trame peut être transmise ensuite vers le dispositif de réception (901 à 904) ; et
transmission du flux de données de sous-groupe déterminé vers le dispositif de réception (901 à 904) par le point de réplication multidiffusion (70).

5. Point de réplication multidiffusion (70) destiné à être utilisé dans un système de communication IPTV (10), comportant :
une première interface pour la réception d'au moins un flux de données multimédia représentant un programme via un réseau de distribution (30) basé IP, des trames étant contenues à des emplacements définis dans le flux de données multimédia,
plusieurs deuxièmes interfaces pour la connexion de dispositifs de réception (901 à 904) via un réseau d'accès local (80),
au moins un dispositif de mémorisation (140) où est stocké un nombre N de flux de données de sous-groupe temporellement décalés les uns des autres, générés à partir d'un flux de données multimédia reçu, N étant supérieur à 1,
un premier dispositif de détermination (120, 130), lequel détermine, en réaction à une instruction de demande de programme d'un dispositif de réception (901 à 904), le flux de données de sous-groupe suivant contenant une trame,
**caractérisé par** :
un dispositif de conversion d'adresse (150),
un dispositif de surveillance et d'analyse (110) destiné à surveiller un flux de données multimédia reçu, pour détecter des trames qui y sont contenues,
un deuxième dispositif de détermination (110) destiné à déterminer l'intervalle temporel entre deux trames successives dans le flux de données multimédia surveillé, et
une mémoire (160) où est sauvegardé un temps de commutation maximal prédéfinissable, le nombre N correspondant au quotient de l'intervalle temporel déterminé entre deux trames et du temps de commutation maximal, le premier dispositif de détermination comprenant un compteur (120) redémarré pour chaque trame détectée, et dont l'intervalle de compteur correspond au temps de commutation maximal,
dans lequel le premier dispositif de détermination (110, 120) est prévu pour déterminer le flux de données de sous-groupe à transmettre en fonction du niveau de compteur actuel,
dans lequel une adresse de multidiffusion univoque est attribuée à chaque programme sélectionnable sur un dispositif de réception et une adresse individuelle est attribuée à chaque flux de données de sous-groupe appartenant à un flux de données multimédia, et
dans lequel le dispositif de conversion d'adresse (150) est prévu pour convertir l'adresse individuelle d'un flux de données de sous-groupe déterminé en adresse de multidiffusion attribuée au programme sélectionné, de manière à permettre la réception du flux de données de sous-groupe appartenant au programme sélectionné par le dispositif de réception (901 à 904).
